# EUROPEAN PATENT APPLICATION

(11) **EP 2 075 410 A2**
(43) Date of publication of application: **01.07.2009**
(21) Application number: 08171897.5
(22) Date of filing: 17.12.2008
(51) Int. Cl.: F01D 5/18, B23H 9/10, B23K 26/38, F23R 3/00

(54) **Method for forming cooling holes and turbine airfoil with hybrid-formed cooling holes**

(30) Priority: 28.12.2007 US 965859
(71) Applicant: General Electric Company, Schenectady, NY 12345 (US)
(72) Inventor: Crow, John, Lebanon, OH 45036 (US); Zurawka, John, Hamilton, OH 45011 (US); Danowski, Michael, Cincinnati, OH 45242 (US); Perez, Carlos Walberto, Brookline, MA 02446 (US)
(74) Representative: Illingworth-Law, William Illingworth

(57) **Abstract**

A method of forming a cooling hole in a workpiece that includes the steps of laser-forming a blind, inwardly-tapering transition opening into a first side of the workpiece, and EDM-forming a generally cylindrical through hole to a second, opposing side of the workpiece communicating with the inwardly-tapering transition opening to form a through cooling hole communicating with the first and second sides of the workpiece. An airfoil having cooling holes formed by use of both laser and EDM is also disclosed.

## Description

### TECHNICAL FIELD AND BACKGROUND OF THE INVENTION

This invention relates to a method of forming cooling holes, and a turbine airfoil with cooling holes formed by use of two distinct hole-forming techniques.

In a gas turbine engine, air is compressed in a compressor, mixed with fuel and ignited in a combustor for generating hot combustion gases which flow downstream through one or more stages of turbine nozzles and blades. The nozzles include stationary vanes followed in turn by a corresponding row of turbine rotor blades attached to the perimeter of a rotating disk. The vanes and blades have correspondingly configured airfoils which are hollow and include various cooling circuits and features which receive a portion of air bled from the compressor for providing cooling against the heat from the combustion gases.

The turbine vane and blade cooling art discloses various configurations for enhancing cooling and reducing the required amount of cooling air in order to increase the overall efficiency of the engine while obtaining a suitable useful life for the vanes and blades. For example, typical vane and blade airfoils in the high pressure turbine section of the engine include cooling holes that extend through the pressure side, or suction side, or both, for discharging a film of cooling air along the outer surface of the airfoil to effect film cooling in a conventional manner.

A typical film cooling hole is in the form of a cylindrical aperture inclined axially through one of the airfoil sides, such as the pressure side, for discharging the film air in the aft direction, The cooling holes are typically provided in a radial or spanwise row of holes at a specific pitch spacing. In this way, the cooling holes discharge a cooling film that forms an air blanket for protecting the outer surface, otherwise known as Alands@ of the airfoil from hot combustion gases during operation.

In the region of the blade leading edge, it is also known to incline the cylindrical film cooling holes at an acute span angle to position the hole outlets radially above the hole inlets and discharge the cooling film radially outwardly from the respective holes. In order to improve the performance of cooling holes, it is also conventional to modify their shape to effect cooling flow diffusion. The diffusion reduces the discharge velocity and increases the static pressure of the airflow. Diffusion cooling holes are found in patented configurations for improving film cooling effectiveness with suitable blowing ratios and backflow margin. A typical diffusion film cooling hole may be conical from inlet to outlet with a suitable increasing area ratio for effecting diffusion without undesirable flow separation. Diffusion occurs in three axes, i.e. along the length of the hole and in two in-plane perpendicular orthogonal axes. See, for example, U.S. Patent No. 6,287,075 to the present assignee.

Other types of diffusion cooling holes are also found in the prior art including various rectangular-shaped holes, and holes having one or more squared sides in order to provide varying performance characteristics. Like conical diffusion holes, the rectangular diffusion holes also effect diffusion in three dimensions as the cooling air flows therethrough and is discharged along the outer surface of the airfoil. See, for example, U.S. Patent Nos. 6,283,199, 5,683,600 and 5,486,093.

As turbine designs have become more complex and efficient, it has become more common for these engines to rely on complex, 3-dimensional, film cooling patterns to distribute cooling air across airfoil bodies to minimize thermal stress on the component in engine operation. The holes typically are round on the inside of the part and transition to a 3-dimensional spout upon exit at the outer wall to be cooled. The transition slows down and spreads the air more effectively across the external surfaces. These transitional holes are difficult and expensive to machine into turbine airfoils and other parts requiring critical cooling airflow.

There are two primary manufacturing technologies used to machine film cooling holeselectrical discharge machining (AEDM@) and laser machining. Each technology has significant benefits and drawbacks. EDM provides the highest quality of hole in terms of recast and surface finish. However, EDM hole formation is slow, typically entailing tens of seconds to over a minute per hole drilled. Typical gas turbine airfoils have between 100 and 500 film cooling holes. While the quality is superior, the investment required to purchase multiple machines is high.

Laser provides the fastest process to drill film cooling holes in gas turbine airfoils. However, the drawback to conventional laser drilling is that the resulting hole is of overall lower quality, which impacts the overall efficiency of the engine. The laser industry and users are developing various technologies to improve laser drilled hole quality but these advances have resulted in significantly reduced hole formation speed, as well as a more difficult to maintain and expensive laser machine. The laser technologies that can match or exceed EDM quality cannot drill complete holes due to power/energy limitations.

Generally, the turbine industry has applied EDM technology to critical components such as rotating turbine blades and laser technology to less critical applications such as non-rotating turbine vanes. Both technologies are used on both types of parts, depending on the engine model.

Therefore, there is a need to provide a more efficient way of forming cooling holes in turbine airfoils and other parts requiring critical cooling airflow.

### SUMMARY OF THE INVENTION

A combination EDM and laser processes is used to form the film cooling holes in turbine airfoils, leveraging the throughput and quality strengths of both technologies. A laser system that can mill the shaped section of the hole is used to reduce the time per shape. The laser is capable of machining/micro-machining the shaped section of the hole in approximately 2 to 1/5 the time required for the same volume with an EDM process. The EDM machine is then used to drill the round through hole from the base of the shaped section. The round hole penetrates through to the internal cooling air passage within the turbine blade or vane. Holes formed by this method are referred to as being "A hybrid-formed."

According to one aspect of the invention, a method of forming a cooling hole in a workpiece includes the steps of laser-forming a blind, inwardly-tapering transition opening into a first side of the workpiece; and EDM-forming a generally cylindrical through hole to a second, opposing side of the workpiece communicating with the inwardly-tapering transition opening to form a through cooling hole communicating with the first and second sides of the workpiece.

In accordance with another aspect of the invention, the workpiece comprises an airfoil, and the step of forming the transition opening comprises the step of forming a diffuser section of the cooling hole, and the step of forming the generally cylindrical through hole comprises the step of forming a metering section of the cooling hole.

In accordance with yet another aspect of the invention, the method of forming the diffuser section includes the step of forming the diffuser section with a conical configuration.

In accordance with yet another aspect of the invention, a method of forming a plurality of cooling holes in a turbine airfoil of the type having a leading edge and an axially spaced-part trailing edge is provided. The leading edge has an axially-extending aerodynamic external surface curvature, a root and a tip spaced-apart along a radially-extending span axis, a pressure sidewall and a laterally-spaced-apart suction sidewall, and a cooling circuit positioned between the pressure sidewall and the suction sidewall for channeling a fluid flow for cooling the airfoil. The method includes the steps of laser-forming a plurality of blind, inwardly-tapering diffuser sections into a first side of the workpiece, and EDM-forming a generally cylindrical through metering section to a second, opposing side of the workpiece communicating with the inwardly-tapering transition opening to form a through cooling hole communicating with the first and second sides of the workpiece.

In accordance with yet another aspect of the invention, the method includes the step of using an inner end of the transition opening as a guide for EDM formation of the cylindrical through hole.

In accordance with yet another aspect of the invention, the method includes the step of forming the transition opening after the step of forming the cylindrical through hole.

In accordance with yet another aspect of the invention, an airfoil is provided that comprises a leading edge and an axially spaced-apart trailing edge, the leading edge having an axially-extending external surface curvature, a root and a tip spaced-apart along a radially-extending span axis, a pressure sidewall and a laterally-spaced-apart suction sidewall, a cooling circuit positioned between the pressure sidewall and the suction sidewall for channeling a fluid flow for cooling the airfoil. A plurality of cooling holes is formed in the leading edge along the span axis of the airfoil in fluid communication with the cooling circuit. At least some of the cooling holes have a diffuser section communicating with the leading edge surface. The diffuser section has opposed walls defining an exit opening on the surface of the leading edge and a respective cylindrical metering section positioned between and communicating with the interior of the airfoil and the diffuser section, wherein the diffuser section is formed by laser and the cylindrical metering section is formed by EDM.

### BRIEF DESCRIPTION OF THE DRAWINGS.

Further aspects of the invention will appear when taken in conjunction with the following drawings, in which:

Figures 1-3 illustrate variant airfoil cooling hole designs having distinct diffuser and metering sections;

Figure 4 is a perspective view of a gas turbine engine rotor blade including cooling holes formed in accordance with an embodiment of the invention;

Figure 5 is a fragmentary perspective view of an upper portion of the leading edge of an airfoil according to an embodiment of the invention, together with a perspective view of an electrode discharge machining tool of a type that may be used to form the cooling holes in the leading edge;

Figure 6 is a vertical cross-section taken through a vertical row of cooling holes after laser diffuser section formation;

Figure 7 is a vertical cross-section taken through a vertical row of cooling holes after EDM metering section formation and laser diffuser section formation; and

Figure 8 is a vertical cross-section taken through a vertical row of cooling holes after EDM metering section formation and before laser diffuser section formation.

### DESCRIPTION OF THE PREFERRED EMBODIMENT AND BEST MODE

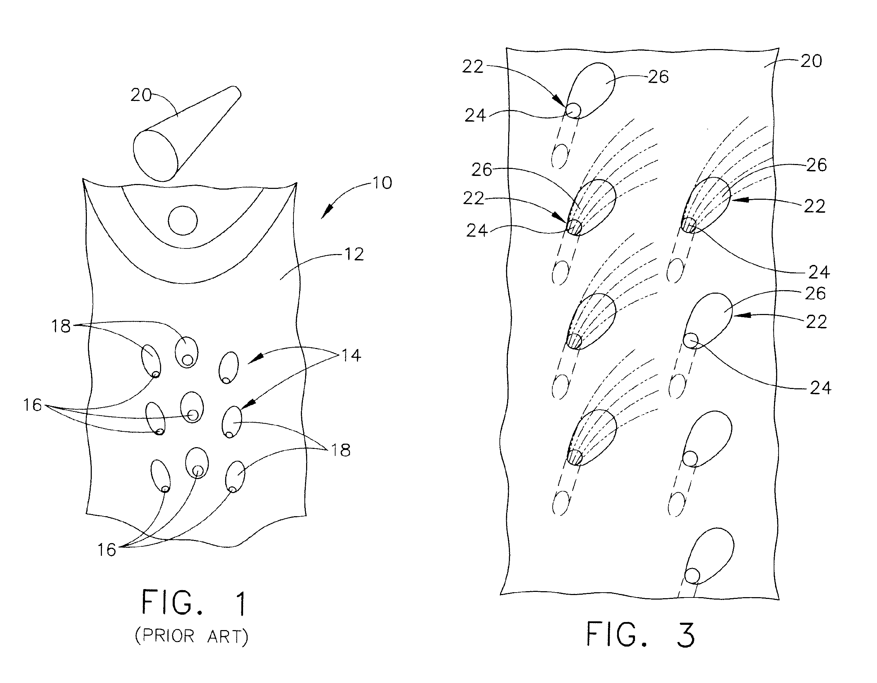

Referring now specifically to the drawings, examples of airfoils with leading edge cooling holes are shown in Figures 1-3. Figure 1 shows an airfoil 10 having a leading edge 12 having cooling holes 14. The holes 14 include a cylindrical metering section 16 and a conical diffuser section 18 that communicates with the holes 14 in the surface of the leading edge. The diffuser section 18 has an inner wall that forms an endless wall surface. The laser is used to form the diffuser section 18 of the holes 14, and a EDM tool is used to form the metering section 16 of the holes 14. Ordinarily, the laser will first be used to form the blind diffuser section 18, and then the EDM tool will be used to extend the hole through to the cooling circuit by forming the cylindrical metering section 16. However, the EDM tool may be used to first form a cylindrical hole extending through the leading edge 12, followed by enlargement of the outer portion of the cylindrical hole by the laser to form the diffuser section 18, leaving the inner portion in its cylindrical form as the metering section 16. The preferred laser type is a YAG high-frequency lamp pump or diode pump pulsed laser, such as made by Rofin or Foba.

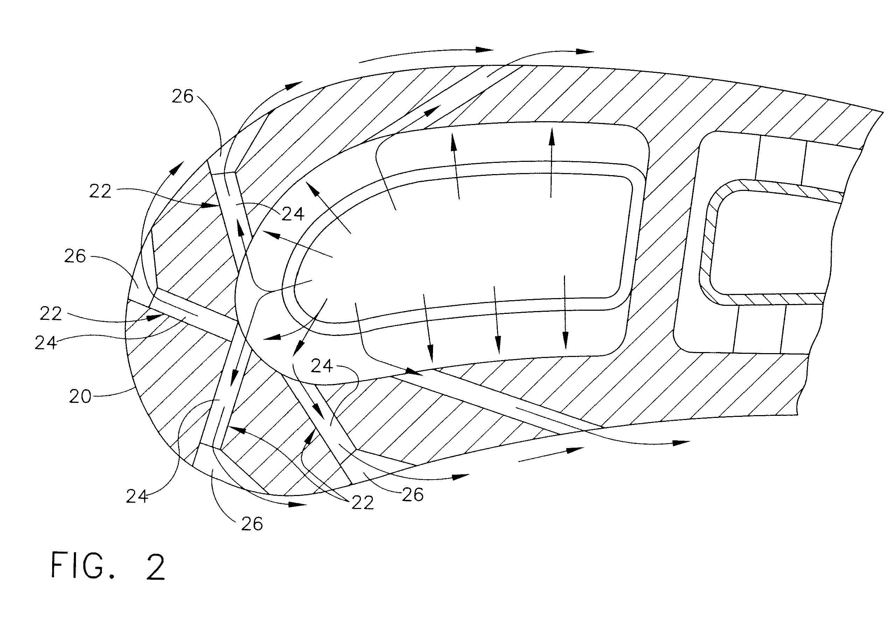

Figures 2 and 3 illustrate another cooling hole design. An airfoil leading edge 20 includes cooling holes 22. Each cooling hole 22 includes a cylindrical, straight metering section 24 having a predetermined centerline axis, and a diffuser section 26 having a centerline axis that is acutely divergent to the metering section 24. A laser is used to form the outer diffuser section 26 of the holes 22, and then an EDM tool is used to form the metering section 24 of the holes 22.

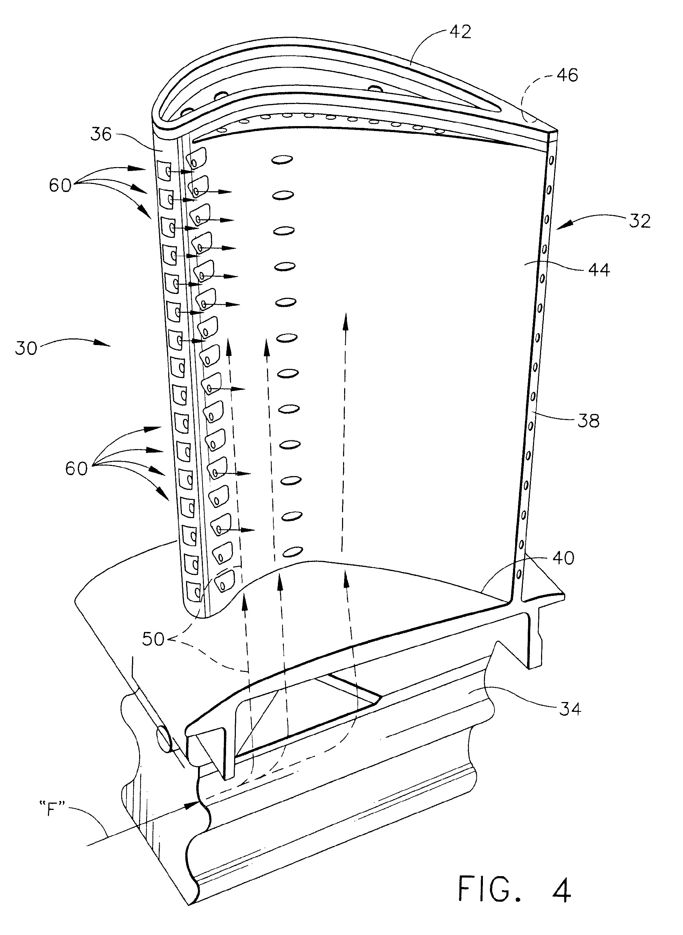

Referring now to Figure 4, a turbine rotor blade 30 in accordance with an exemplary embodiment of the invention is shown. The blade 30 includes an airfoil 32 having an integral dovetail 34 at a radially inner end for mounting the blade 30 to the perimeter of a rotor disk, not shown, in an annular row of such blades 30 in a conventional manner.

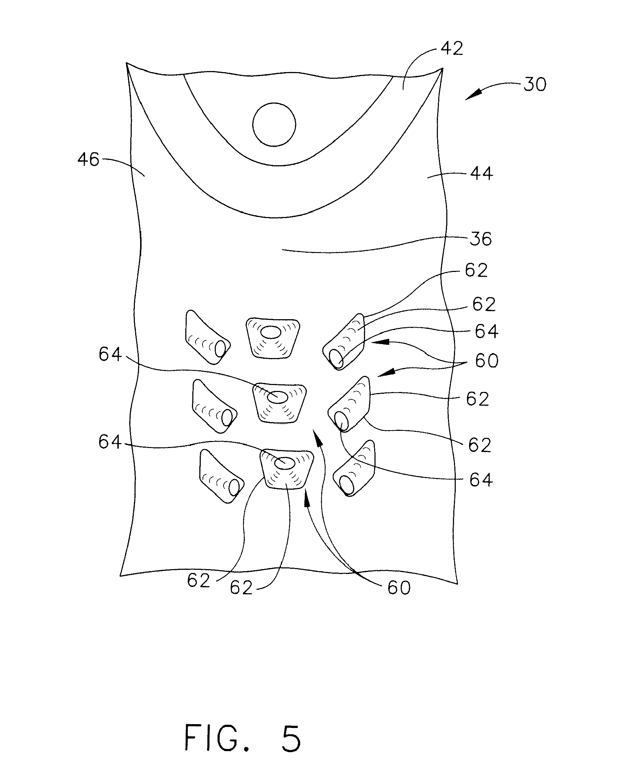

In the exemplary embodiment illustrated in Figure 5, the blade 30 is a first stage high pressure turbine rotor blade disposed immediately downstream of a high pressure turbine nozzle (not shown) which receives hot combustion gases from a combustor of a gas turbine engine (not shown) in a conventional manner. The airfoil 32 and dovetail 34 are suitably hollow for receiving a cooling fluid "F" such as a portion of compressed air bled from a compressor of the engine (not shown), for cooling the blade 30 during operation against the heat from the combustion gases.

The airfoil 32 includes a leading edge 36 and an opposite trailing edge 38. The airfoil 32 also includes a root 40 at a platform portion of the dovetail 34, and an opposite tip 42 spaced radially-apart along a generally radially-extending span axis.

The airfoil 32 also includes a pressure sidewall 44 that is generally concave and an opposite, suction sidewall 46 that is generally convex and is spaced-apart from the pressure sidewall 44. The pressure sidewall 44 and suction sidewall 46 extend from leading edge 36 to trailing edge 38, and root 40 to tip 42, respectively. Airfoil 32 as well as the dovetail 34 includes a cooling circuit or channel 50 disposed between the airfoil sides 44 and 46 for channeling the cooling fluid AF@ through the airfoil for providing cooling during operation.

Although the specific airfoil 32 is shown as a portion of the turbine rotor blade 30, the invention applies as well to any form of airfoil such as those also found in the stationary turbine nozzle (not shown).

In accordance with one exemplary embodiment of the invention, a plurality of leading edge cooling holes 60 are spaced-apart along the leading edge 36 in three rows for discharging the cooling fluid AF@ from the cooling circuit 50 inside the airfoil 32 along its outer surface to provide a cooling film of fluid onto the surface of the airfoil, particularly in the area of the leading edge 36 and areas immediately aft of the leading edge 36.

Referring now to Figure 5, the cooling holes 60 formed in the leading edge 36 along the span axis of the airfoil 32 each include a diffuser section 62 and a cylindrical metering section 64 positioned between and communicating with the cooling circuit 50 of the airfoil 32. The laser is used to form the diffuser sections 62, and the EDM tool, which represents the Apositive@ cylindrical shape of the hole to be formed, is used to form the metering section 64 of the holes 60.

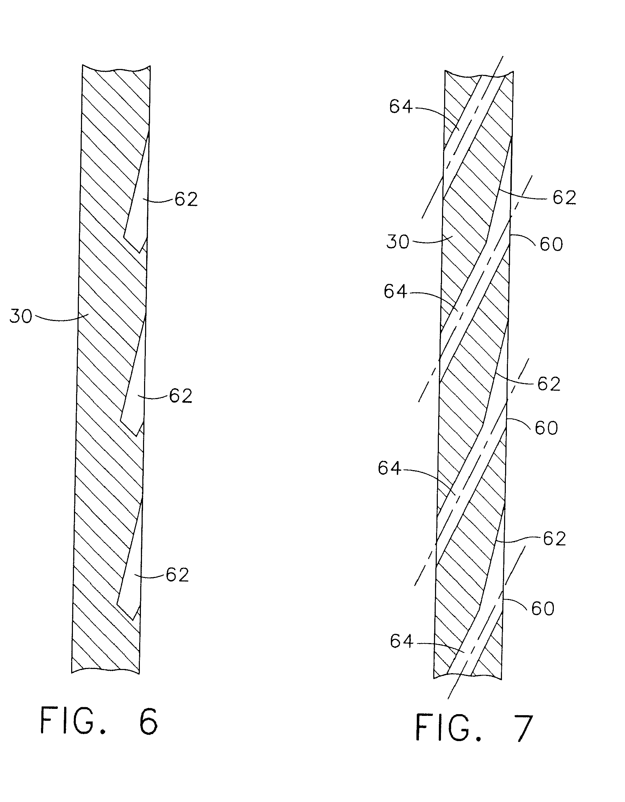

As is shown in Figures 6 and 7, in one preferred embodiment, the diffuser section 62 is first laser-formed in the blade 30, then the hole 60 is completed by the EDM tool to form the cylindrical section 64 through to the cooling circuit.

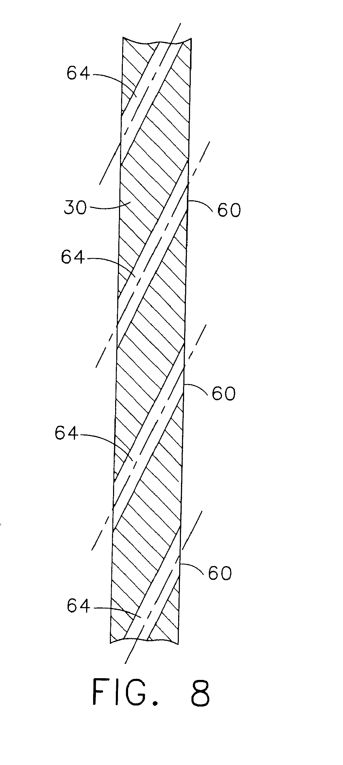

Figure 8 shows an embodiment wherein the cylindrical metering section 64 is formed first using the EDM process, and extends through the blade 30 from the exterior to the cooling circuit. Thereafter, the laser is used to form the diffuser section (not shown) by enlarging the portion of the previously-formed metering section 64 closest to the exterior of the blade 30.

The advantages of this process include the fact that investment is minimized over an all EDM process because of increased throughput and the ability of a single laser machine to replace between 2 and 5 EDM machines. Overall part quality is improved by using the more precise laser process for the diffuser section 62 of the cooling holes 60 on the surface of the airfoil 32 where airflow disturbances are most likely to result in inefficient operation. The inner end of the pre-existing laser shaped diffuser section 62 can also serve as a locating guide for the EDM electrode as it drills the cylindrical metering section 64 through to the cooling circuit, minimizing scrap and rework.

The laser milling process can be altered via programming, eliminating the need for EDM electrode changes and EDM electrode tooling, which have a significant impact on investment amounts and manufacturing scheduling. The hybrid system utilizes transferable tooling between laser and EDM, minimizing setup and positioning errors when moving the part from one machine to the second machine.

An airfoil with cooling holes formed by a combination of laser and EDM and a related method are described above. Various details of the invention may be changed without departing from its scope. Furthermore, the foregoing description of the preferred embodiment of the invention and the best mode for practicing the invention are provided for the purpose of illustration only and not for the purpose of limitation--the invention being defined by the claims.

## Claims

1. A method of forming a cooling hole (14) in a workpiece, comprising the steps of laser-forming a blind, inwardly-tapering transition opening into a first side of the workpiece, and EDM-forming a generally cylindrical through hole to a second, opposing side of the workpiece communicating with the inwardly-tapering transition opening to form a through cooling hole (14) communicating with the first and second sides of the workpiece.

2. A method according to claim 1, wherein the workpiece comprises an airfoil (10), and the step of forming the transition opening comprises the step of forming a diffuser section (18) of the cooling hole (14), and the step of forming the generally cylindrical through hole comprises the step of forming a metering section (24) of the cooling hole (14).

3. A method of forming a plurality of cooling holes (14) in a turbine airfoil (10) of the type having a leading edge (36) and an axially spaced-part trailing edge (38), the leading edge (36) having an axially-extending aerodynamic external surface curvature, a root (40) and a tip (42) spaced-apart along a radially-extending span axis, a pressure sidewall (44) and a laterally-spaced-apart suction sidewall (46), a cooling circuit (50) positioned between the pressure sidewall (44) and the suction sidewall (46) for channeling a fluid flow for cooling the airfoil (32), comprising the steps of laser-forming a plurality of blind, inwardly-tapering diffuser sections (62) into a first side of the airfoil (10), and EDM-forming a generally cylindrical through metering section (64) to a second, opposing side of the airfoil (10) communicating with the inwardly-tapering transition opening to form a through cooling hole (60) communicating with the first and second sides of the airfoil (10).

4. A method according to claim 1 or claim 3, and including the step of using an inner end of the transition opening as a guide for EDM formation of the cylindrical through hole.

5. A method according to claim 1 or claim 3, wherein the step of forming the transition opening is performed before the step of forming the cylindrical through hole.

6. A method according to claim 1 or claim 3, wherein the step of forming the transition opening is performed after the step of forming the cylindrical through hole.

7. A method according to any one of the preceding claims, wherein the method of forming the diffuser section includes the step of forming the diffuser section with a conical configuration.

8. An airfoil (32), comprising:
(a) a leading edge (36) and an axially spaced-part trailing edge (38), the leading edge (36) having an axially-extending external surface curvature;
(b) a root (40) and a tip (42) spaced-apart along a radially-extending span axis;
(c) a pressure sidewall (44) and a laterally-spaced-apart suction sidewall (46);
(d) a cooling circuit (50) positioned between the pressure sidewall (44) and the suction sidewall (46) for channeling a fluid flow for cooling the airfoil (32);
(e) a plurality of cooling holes (60) formed in the leading edge (36) along the span axis of the airfoil (32) in fluid communication with the cooling circuit (50), at least some of the cooling holes (60) having a diffuser section (62) communicating with the leading edge (36) surface, the diffuser section (62) having opposed walls defining an exit opening on the surface of the leading edge (36) and a respective cylindrical metering section (64) positioned between and communicating with the interior of the airfoil (32) and the diffuser section (62), wherein the diffuser section (62) is formed by laser and the cylindrical metering section (64) is formed by EDM.

9. An airfoil (32) according to claim 8, wherein the airfoil (32) is a gas turbine airfoil (32).

10. An airfoil (32) according to claim 8 or claim 9, wherein at least some of the diffuser sections (62) have opposed walls defining a generally quadralinear exit opening on the external surface, and at least some of the diffuser walls (62) have a convex curvature that approximately matches the external surface curvature of the airfoil (32) local to the cooling hole (60) whereby fluid flow from the exit opening is evenly dispersed and spread along land portions of the external surface of the airfoil (32) adjacent to the cooling holes (60), and the diffuser section (62) has opposed walls defining an exit opening on the surface of the leading edge (36) and a respective cylindrical metering section (64) positioned between and communicating with the interior of the airfoil (32) and the diffuser section (62) and defining a longitudinal axis that diverges from a radius of the leading edge (36), wherein the diffuser section (62) is formed by laser and the cylindrical metering section (64) is formed by EDM.
